# EUROPEAN PATENT APPLICATION

(11) **EP 1 811 329 A1**
(43) Date of publication of application: **25.07.2007**
(21) Application number: 06124301.0
(22) Date of filing: 17.11.2006
(51) Int. Cl.: G02B 26/12, G02B 7/182

(54) **Laser scanning device**

(30) Priority: 20.01.2006 KR 20060006198
(71) Applicant: Samsung Electronics Co., Ltd., Suwon-si 442-742 Gyeonggi-Do (KR)
(72) Inventor: Choi, An-sik, Yeongtong-dong, Gyeonggi-do Suwon-si (KR); Yang, Myung-woo, Yeongtong-dong Gyeonggi-do Suwon-si (KR)
(74) Representative: Waddington, Richard

(57) **Abstract**

A laser scanning device for use with an image forming apparatus, including an optical housing (125), a light source (110) installed in the optical housing (125) to generate a laser beam, a deflection unit to deflect the laser beam emitted from the light source (110), a focusing lens (117) to focus the laser beam deflected by the deflection unit onto a laser scanning surface, a reflective mirror (115) to change the path of the laser beam and thereby, scan the laser beam onto a position of the laser scanning surface, and a mirror assembly unit (130) to diversify installation angles of the reflective mirror (115) to facilitate an assembly thereof.

## Description

The present invention relates to a laser scanning device, and, more specifically, to a laser scanning device for use in image forming apparatuses including digital copiers, laser printers, fax machines, and the like.

A laser printer uses a laser scanning device, which deflects a laser beam generated from a light source with a polygonal rotating mirror and uses an optical system as a medium to scan the deflected laser beam onto a photosensitive drum. Such a laser scanning device generally accommodates a light source, a polygonal rotating mirror, a drive motor to rotate the polygonal rotating mirror and a scanning lens, in an optical housing thereof. A scanning beam is scanned onto the photosensitive drum through a glass covering installed at a window formed on the sidewall of the optical housing.

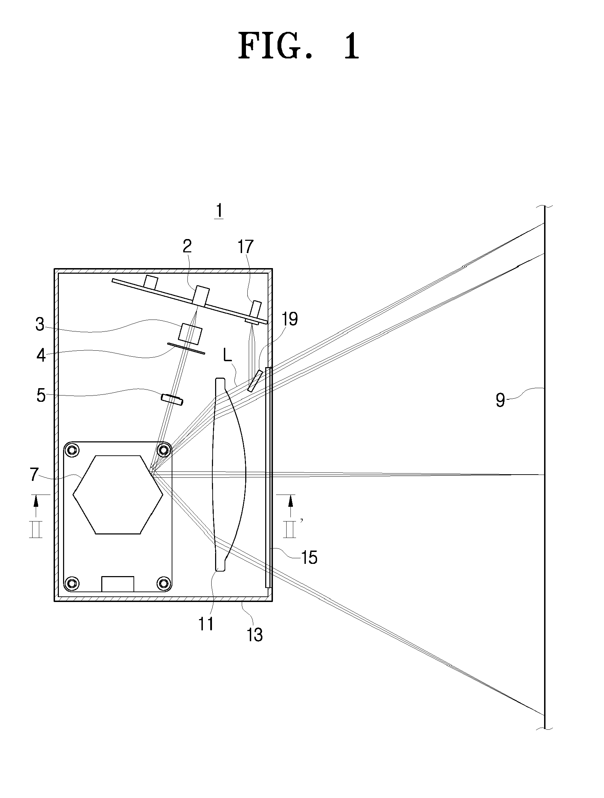

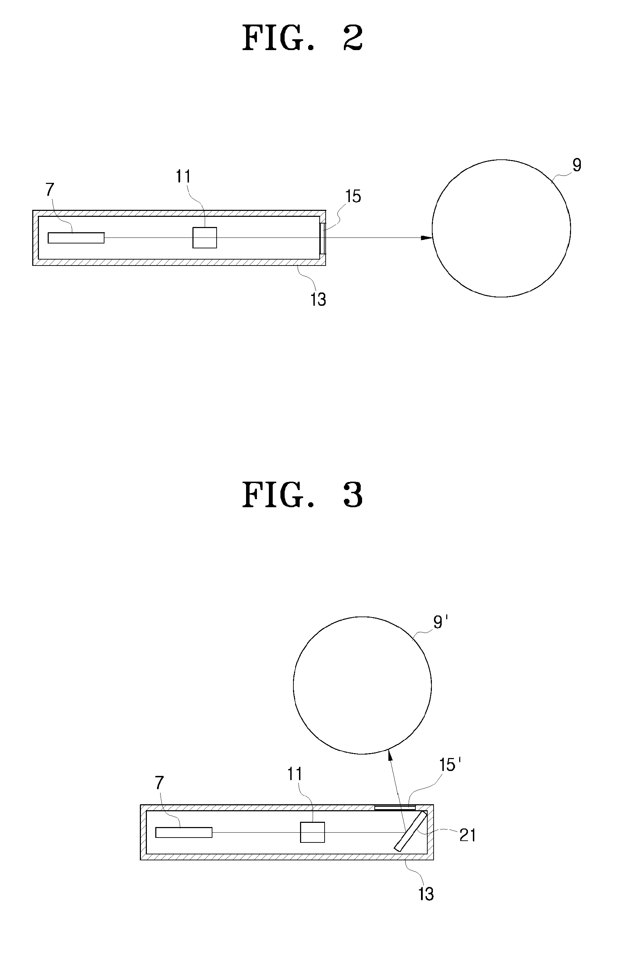

FIG. 1 is a plan view showing the structure of a conventional laser scanning device, and FIG. 2 is a cross-sectional view taken along line II-II' in FIG. 1. As shown in FIGS. 1 and 2, in the conventional laser scanning device 1, a laser beam emitted from a light source 2 is changed into a parallel light beam or a converging light beam while passing through a collimating lens 3. Then, the laser beam, having passed through the collimating lens 3 proceeds, via a slit 4, through a cylindrical lens 5, and forms an image on the surface of a polygonal mirror 7 linearly in the horizontal direction. Being converged by a focusing lens 11 and incident on the photosensitive drum 9, the laser beam creates a focal point and forms a desired image on the photosensitive drum 9.

The above-described components are typically assembled in a single optical housing 13 to constitute a scanning unit. In addition, a transparent glass covering 15 is attached to the outside of the optical housing 13 to prevent the inflow of foreign substances, such as dust, into the optical housing 13.

In addition, an optical sensor 17 provides for horizontal synchronization (sync) with a light L. The optical sensor 17 has a sync signal detection reflector 19 to reflect light having passed through the focusing lens 11 toward the optical sensor 17.

In the conventional laser scanning device 1, the focusing lens 11 and the photosensitive drum 9 are aligned. Thus, the laser beam, having passed through the focusing lens 11, is focused onto the photosensitive drum 9 without changing an optical path thereof.

FIG. 3 illustrates the constitution of another conventional laser scanning device. Here, like reference numerals used in FIGS. 1 and 2 refer to like elements, and detailed description about them will be omitted. As shown in FIG. 3, the laser scanning device includes a reflective mirror 21, which reflects a laser beam, having passed through a focusing lens 11, upwardly relative to an optical housing 13 so as to form a latent image on the surface of a photosensitive drum 9'. Here, the photosensitive drum 9' is installed proximate to an upper portion of the optical housing 13. A glass covering 15' is provided to the upper portion of the optical housing 13.

As described above, changing a path of light, having passed through the focusing lens 11, is necessary according to the installed positions of the photosensitive drums 9 and 9'. To this end, the reflective mirror 21 having diverse installation angles is employed, and the installation positions of glass coverings 15 and 15' are changed accordingly.

Thus, since the installation positions of the reflective mirror 21 and glass coverings 15 and 15' depend on the laser scanning direction, the optical housing 13 has to be manufactured separately from the reflective mirror 21 and the glass coverings 15 and 15'.

It is, therefore, an aspect of the present invention to provide a laser scanning device capable of supporting diverse laser scanning angles, while using a single optical housing.

According to the present invention there is provided an apparatus and method as set forth in the appended claims. Preferred features of the invention will be apparent from the dependent claims, and the description which follows.

According to an aspect of the present invention there is provided a laser scanning device for use with an image forming apparatus, comprising an optical housing, a light source installed in the optical housing adapted to generate a laser beam, a deflection unit adapted to deflect the laser beam emitted from the light source, a focusing lens adapted to focus the laser beam deflected by the deflection unit onto a laser scanning surface, a reflective mirror adapted to change the path of the laser beam and thereby scan the laser beam onto a position of the laser scanning surface, and a mirror assembly unit adapted to diversify installation angles of the reflective mirror adapted to facilitate an assembly thereof.

Preferably, the mirror assembly unit comprises a plurality of mirror supporting members provided to the optical housing to support the installation angles of the reflective mirror according to the position of the laser scanning surface. Also, the mirror support members are preferably paired to support upper and lower sides of the reflective mirror. In addition, the mirror support members preferably have insertion grooves into which the upper and lower sides of the reflective mirror are inserted. The optical housing is preferably provided with a plurality of light outlets. The optical housing preferably further includes glass covering supporting units to support glass coverings, which cover the light outlets. The mirror supporting members preferably support the angle of the reflective mirror that reflects light passed through the focusing lens towards an upper side or a lower side of the optical housing.

Preferably, a plurality of reflective mirrors and a plurality of light outlets are formed in a single optical housing. Thus, one optical housing may be effectively shared in correspondence to diverse laser scanning directions.

As aforementioned, since one optical housing is shared in correspondence to diverse laser scanning directions, a separate optical housing for each laser scanning direction is not required. In consequence, manufacturing costs may be saved, and losses in development investment and development schedules may be minimized.

Additional and/or other aspects and advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a plan view showing the structure of a conventional laser scanning device;
FIG. 2 is a cross-sectional view taken along line II-II' in FIG. 1;
FIG. 3 is a diagram showing the structure of another conventional laser scanning device;
FIG. 4 is a plan view showing the structure of a laser scanning device according to one embodiment of the present invention;
FIG. 5 is a cross-sectional view taken along line V-V' in FIG. 4;
FIG. 6 is a diagram showing a structure in which laser scanning occurs above the optical housing according to an embodiment of the invention;
FIG. 7 is a diagram showing a structure in which laser scanning occurs below an optical housing according to an embodiment of the invention;
FIG. 8 is a cross-sectional view taken along line V-V' in FIG. 4;
FIG. 9 is a diagram showing a structure in which laser scanning occurs above the optical housing according to an embodiment of the invention; and
FIG. 10 is a diagram showing a structure in which laser scanning occurs below an optical housing according to an embodiment of the invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

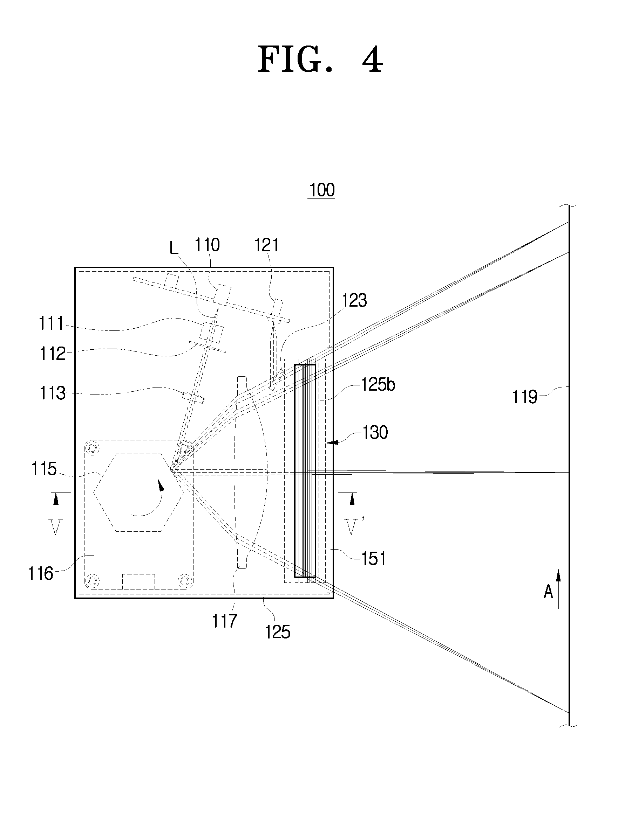

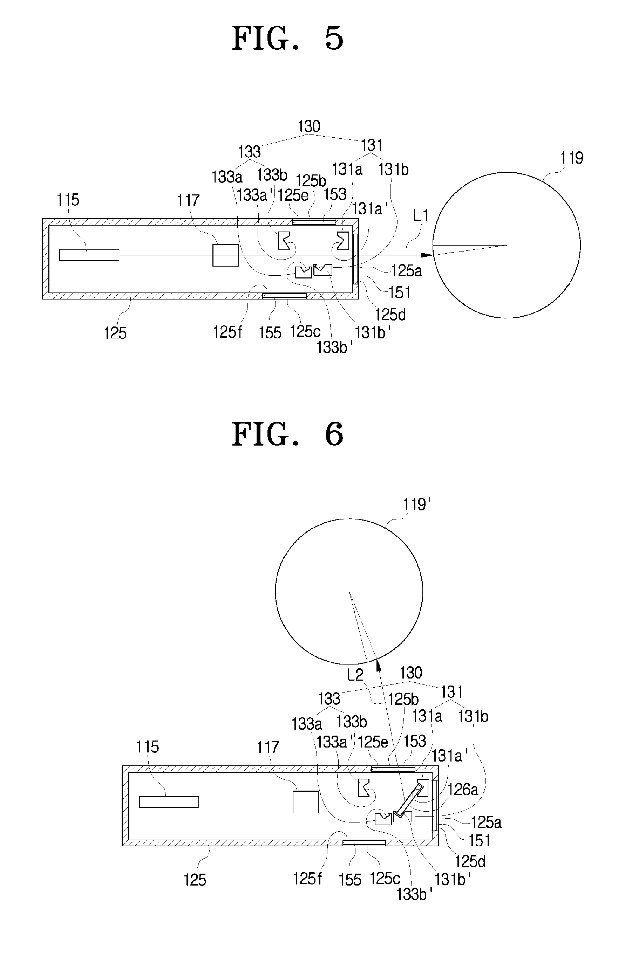

FIG. 4 is a plan view showing the structure of a laser scanning device according to one embodiment of the present invention, and FIG. 5 is a cross-sectional view taken along line V-V' in FIG. 4. As shown in FIG. 4, the laser scanning device 100 includes a light source 110, a collimating lens 111, slits 112, a cylindrical lens 113, a polygonal mirror 115, and a focusing lens 117. The light source 110 generates a laser beam L, and a laser diode is usually used therefore, although it is understand that other light emitting devices could be employed. The collimating lens 111 changes the laser beam L, emitted from the light source 110, into a parallel light beam or a converging light beam. The slits 112 restrict the procession of the laser beam L. The cylindrical lens 113 focuses the laser beam L, having passed through the slits 112, onto the surface of the polygonal mirror 115 linearly in the horizontal direction.

The polygonal mirror 115 scans the laser beam L, passed through the slits 112, by moving the laser beam L at a constant linear velocity in the horizontal direction. To this end, a motor 116 rotates the polygon mirror 115 at a constant velocity. The focusing lens 117, as an F-θ lens, has a predetermined index of refraction with respect to an optical axis thereof. The focusing lens 117 polarizes the reflected laser beam of a constant speed from the polygon mirror 115 into the main scanning direction (arrow A), corrects aberration, and focuses the laser beam on the laser scanning surface of the photosensitive drum 119.

In addition, an optical sensor 121 provides horizontal sync with the laser beam L. The optical sensor 121 includes a sync signal detection reflector 123 to reflect the light, having passed through the focusing lens 117, towards the optical sensor 121.

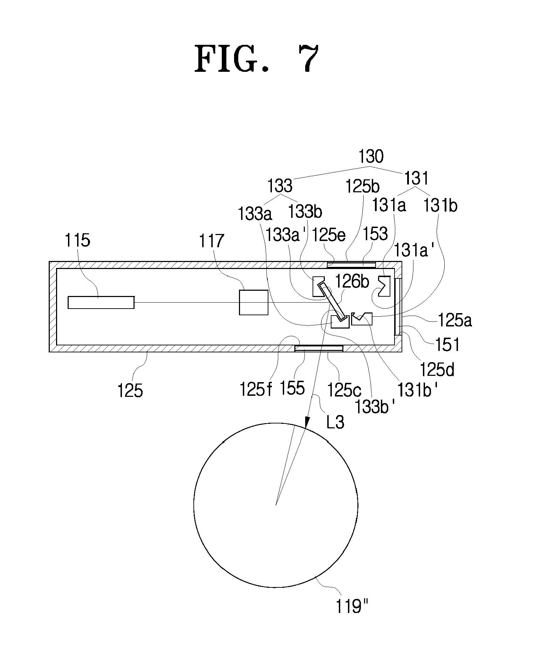

The above-described components are typically assembled in a single optical housing 125 of the laser scanning device 100. The optical housing 125 is also provided with a mirror assembly unit where reflective mirrors (a first reflective mirror 126a and a second reflective mirror 126b: see FIGS. 6 and 7) to change the path of the light, having passed through the focusing lens 115, are assembled.

Referring to FIG. 5, the mirror assembly unit 130 includes first and second mirror supporting members 131 and 133 to support installation angles of the first and second reflective mirrors 126a and 126b, respectively. According to an embodiment of the invention, the first and second mirror supporting members 131 and 133 each comprise pairs of supporters 131a, 131b, and 133a, 133b, respectively, to support both upper and lower sides of the reflective mirrors 126a and 126b, respectively. According other embodiments of the invention (not shown), the first and second mirror supporting member are single structures or comprise more than two structures.

The first and second pairs of supporters 131a and 131b and 133a and 133b each may comprise insertion grooves 131a', 131b', and 133a', 131a', respectively, into which the upper and lower sides of the first and second reflective mirrors 126a and 126b are inserted, respectively.

The optical housing 125 is provided with a plurality of light outlets 125a, 125b and 125c. Meanwhile, glass covering supporting units 125d, 125e, and 125f are formed in the vicinity of the light exits 125a, 125b, and 125c. The first, second, and third glass coverings 151, 153, and 155 are installed through the glass covering supporting units 125d, 125e, and 125f, respectively, and prevent the influx of foreign substances from an exterior of the optical housing 125.

FIG. 5 illustrates a case in which the photosensitive drum 119 is installed in line with the focusing lens 117. Thus, light L1, having passed through the focusing lens 117, is transmitted through the first glass covering 151 without changing a path thereof and is then focused on the photosensitive drum 119. In this case, a separate reflective mirror is not required.

FIG. 6 is a diagram showing an embodiment of the invention in which laser scanning occurs above the optical housing. As shown in FIG. 6, a photosensitive drum 119' is installed above an upper portion of the optical housing 125. A first reflective mirror 126a is installed at the first pair of supporters 131a and 131b to reflect light L2, having passed through the focusing lens 117, in the upward direction relative to the optical housing 125. The reflected light L2 passes through the second glass covering 153 and, collides in focus with the photosensitive drum 119'.

FIG. 7 is a diagram showing an embodiment of the invention in which laser scanning occurs below the optical housing. As shown in FIG. 7, a photosensitive drum 119" is installed below a lower portion of the optical housing 125. A second reflective mirror 126b is installed at the second pair of supporters 133a and 133b to reflect light L3, having passed through the focusing lens 117, in the downward direction relative to the optical housing 125. The reflected light L3 from the second reflective mirror 126b passes through the third glass covering 153 and, then, collides in focus with the photosensitive drum 119".

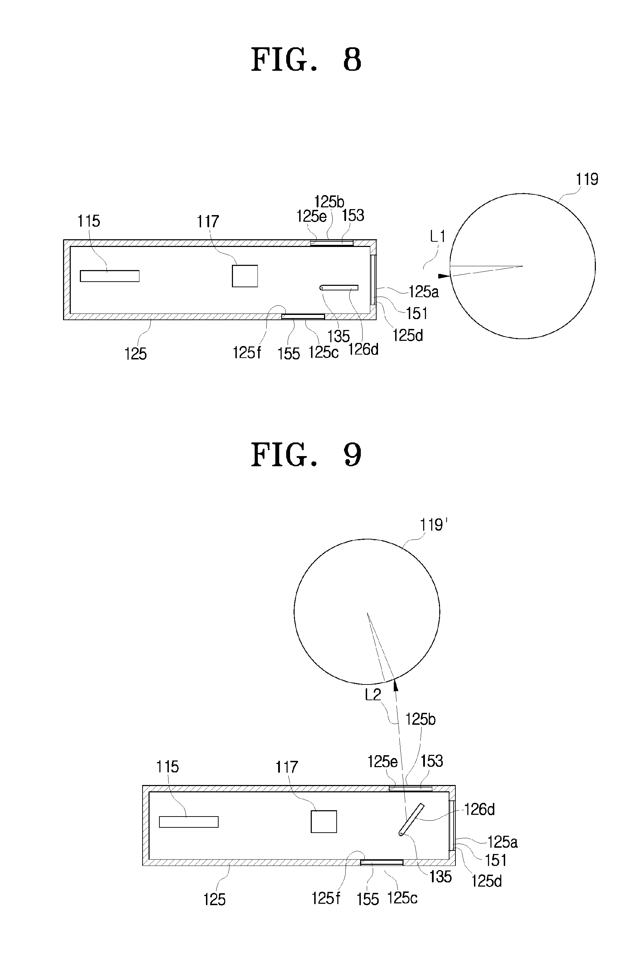

According to another aspect of the invention shown in FIGs. 8 through 10, a reflective mirror 126d is hingedly attached to the optical housing 125 using hinge 135 to allow a single mirror 126d to provide multiple reflection directions. The optical housing 125 is provided with a plurality of light outlets 125a, 125b and 125c. Glass covering supporting units 125d, 125e, and 125f are formed in the vicinity of the light exits 125a, 125b, and 125c. The first, second, and third glass coverings 151, 153, and 155 are installed through the glass covering supporting units 125d, 125e, and 125f, respectively, and prevent the influx of foreign substances from an exterior of the optical housing 125. However, it is understood that other constructions are possible to provide a single reflecting mirror and a single mirror supporting member that is able to shift positions and attitudes at which the light is not reflected, reflected upward, or reflected downward. Additionally, while not required, it is understood that mirror supporting members can further be included to secure the mirror 126d in its angled positions.

As shown in FIG. 8, the photosensitive drum 119 is installed in line with the focusing lens 117. As such, the mirror 126d is rotated about the hinge 135 to not be in the light path between the light source 115 and the photosensitive drum 119. Thus, light L1, having passed through the focusing lens 117, is transmitted through the first glass covering 151 without the mirror 126d changing a path thereof, and is then focused on the photosensitive drum 119.

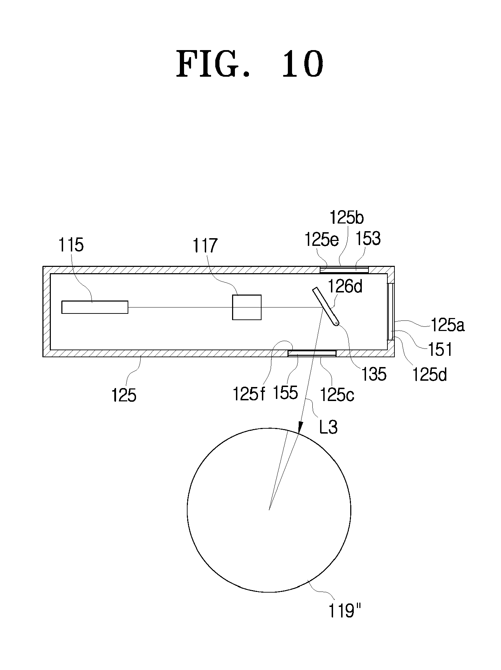

As shown in FIG. 9, a photosensitive drum 119' is installed above an upper portion of the optical housing 125. The reflective mirror 126d is rotated about the hinge to reflect the light L2, having passed through the focusing lens 117, in the upward direction relative to the optical housing 125. The reflected light L2 passes through the second glass covering 153, and collides in focus with the photosensitive drum 119'.

As shown in FIG. 10, a photosensitive drum 119" is installed below a lower portion of the optical housing 125. The reflective mirror 126d is rotated about the hinge to reflect the light L3, having passed through the focusing lens 117, in the downward direction relative to the optical housing 125. The reflected light L3 from the second reflective mirror 126b passes through the third glass covering 153 and collides in focus with the photosensitive drum 119".
Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A laser scanning device for use with an image forming apparatus, comprising:
an optical housing (125);
a light source (110) installed in the optical housing (125) adapted to generate a laser beam;
a deflection unit adapted to deflect the laser beam emitted from the light source (110);
a focusing lens (117) adapted to focus the laser beam deflected by the deflection unit onto a laser scanning surface;
a reflective mirror (115) adapted to change the path of the laser beam and thereby scan the laser beam onto a position of the laser scanning surface; and
a mirror assembly unit (130) adapted to diversify installation angles of the reflective mirror (115) to facilitate an assembly thereof.

2. The device of claim 1, wherein the mirror assembly unit (130) comprises a plurality of mirror supporting members (131,133) provided to the optical housing (125) to support the installation angles of the reflective mirror (115) according to the position of the laser scanning surface.

3. The device of claim 2, wherein the mirror support members are paired to support upper and lower sides of the reflective mirror (115).

4. The device of claim 3, wherein the mirror support members comprise insertion grooves (131a', 131b', 133a', 131a') into which the upper and lower sides of the reflective mirror (115) are inserted.

5. The device of any one of claims 2 to 4, wherein the optical housing (125) comprises a plurality of light outlets (125a,125b,125c).

6. The device of claim 5, wherein the optical housing (125) further comprises:
glass coverings (151, 153, 155) adapted to cover the light outlets (125a,125b,125c); and
glass covering supporting units (125d,125e,125f) adapted to support the glass coverings (151,153,155).

7. The device of any one of claims 2 to 6, wherein the mirror supporting members (131,133) are adapted to support installation angles of the reflective mirror (115) that allow the reflective mirror (115) to reflect light, passed through the focusing lens (117), towards an upper side or a lower side of the optical housing (125).

8. The device of any preceding claim, wherein the mirror assembly unit (130) comprises a hinge member in the optical housing (125) to rotatably support the reflective mirror (115) to provide the installation angles of the reflective mirror (115) according to the position of the laser scanning surface.

9. An optical housing (125) of an image forming device capable of supporting diverse laser scanning angles, comprising:
a hinge member (110) supported in the interior of the housing adapted to emit a light beam;
a reflective mirror (115) adapted to reflect the light beam according to positions and attitudes of the reflective mirror (115);
a plurality of light outlets (125a,125b,125c) at various positions in walls of the housing; and
a mirror assembly unit (130) adapted to support the reflective mirror (115) at the particular positions and attitudes thereof such that the reflective mirror (115), positioned at the particular positions and attitudes, is adapted to reflect the light beam towards the corresponding light outlets (125a,125b,125c).

10. The optical housing (125) according to claim 9, wherein the collimated hinge member (110) comprises:
a light source (110) adapted to generate a light beam;
a collimating lens (111) adapted to collimate the light beam;
slits (112) adapted to restrict the procession of the light beam; and
a cylindrical lens (113) adapted to focus the light beam.

11. The optical housing (125) according to claim 10, wherein the light source (110) comprises a laser diode.

12. The optical housing (125) according to claim 9 or claim 10, wherein the mirror assembly unit (130) comprises first and second mirror supporting members (131,133) adapted to support the reflective mirror (115) at first and second particular positions and attitudes thereof, respectively.

13. The optical housing (125) according to claim 12, wherein the first and second mirror supporting members (131,133) each comprise pairs of supporters (131a,131b/133a,133b) adapted to support an upper and a lower side of the reflective mirror (115).

14. The optical housing (125) according to claim 13, wherein the supporters comprise insertion grooves (131a', 131b', 133a', 131a') into which the upper and lower sides of the reflective mirror (115) are inserted, respectively.

15. The optical housing (125) according to any one of claims 9 to 14, wherein the light outlets (125a,125b,125c) comprise:
glass coverings (151,153,155) adapted to seal the optical housing (125); and
glass covering supporting units (125d,125e,125f) adapted to support the glass coverings (151, 153, 155) in the light outlets (125a,125b,125c).

16. An image forming device, comprising:
a hinge member (110) supported in the interior of the housing adapted to emit a light beam;
a reflective mirror (115) adapted to reflect the light beam according to positions and attitudes of the reflective mirror (115);
a plurality of light outlets (125a,125b,125c) at various positions in walls of the housing;
a mirror assembly unit (130) adapted to support the reflective mirror (115) at the particular positions and attitudes thereof such that the reflective mirror (115), positioned at the particular positions, is adapted to reflect the light beam towards the corresponding light outlets (125a,125b,125c); and
a photosensitive drum on which the light beam, having passed through the one of the light outlets (125a,125b,125c), is adapted to form a latent image.

17. An optical housing (125) of an image forming device capable of supporting diverse laser scanning angles, comprising:
a hinge member (110) supported in the interior of the housing adapted to emit a light beam;
a plurality of light outlets (125a,125b,125c) at various positions in walls of the housing; and
a mirror assembly unit (130) usable to support a reflective mirror (115) at particular positions and attitudes thereof such that the reflective mirror (115), positioned at the particular positions and attitudes, is able to reflect the light beam towards the corresponding light outlets (125a,125b,125c).

18. The optical housing (125) according to claim 17, wherein the mirror assembly unit (130) is adapted to support the reflective mirror (115) to reflect the light beam according to at least one particular position and attitude of the positions and altitudes.

19. The optical housing (125) according to claim 17 or claim 18, wherein the mirror assembly unit (130) does not support the reflective mirror (115) and the light beam exits the housing through a light outlet in line with the light beam source.
